(19) Europäisches Patentamt
European Patent Office
Office européen des brevets

(11) **EP 2 944 375 A1**

(12) **EUROPEAN PATENT APPLICATION**
published in accordance with Art. 153(4) EPC

(43) Date of publication:
**18.11.2015  Bulletin 2015/47**

(21) Application number: **14738224.6**

(22) Date of filing: **08.01.2014**

(51) Int Cl.:
**B01J 13/14** (2006.01)     **B01F 3/08** (2006.01)
**C08F 2/22** (2006.01)     **C08F 2/44** (2006.01)
**C08F 212/08** (2006.01)     **C08F 220/42** (2006.01)

(86) International application number:
**PCT/JP2014/050608**

(87) International publication number:
**WO 2014/109412 (17.07.2014 Gazette 2014/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.01.2013  JP 2013002829**

(71) Applicant: **JX Nippon Oil & Energy Corporation
Chiyoda-ku
Tokyo 100-0004 (JP)**

(72) Inventors:
• **JIN, Zhengzhe
Tokyo 100-0004 (JP)**
• **TAKASHIMA, Tsutomu
Tokyo 100-0004 (JP)**

(74) Representative: **Twelmeier Mommer & Partner
Patent- und Rechtsanwälte
Westliche Karl-Friedrich-Strasse 56-68
75172 Pforzheim (DE)**

(54) **MICROCAPSULE PRODUCTION METHOD AND MICROCAPSULE**

(57)     A microcapsule having a functional organic compound as a core material and a cross-linked or non-cross-linked polymer as a shell material achieves stabilization and efficiency of expression of function of the core material. Provided is a method for producing a microcapsule that is obtained by a polymerization reaction of at least one species of vinyl monomer using an O/W dispersion containing an organic compound having no vinyl group and the vinyl monomer as raw material, and has a core-shell structure in which a core is the organic compound having no vinyl group and a shell is a polymer of the vinyl monomer compound, including the step of emulsifying the O/W dispersion by continuously and successively passing the O/W dispersion through a plurality of net bodies that are provided along a flow path and disposed at certain intervals before the polymerization reaction

F I G.  3

EP 2 944 375 A1

**Description**

Technical Field

The present invention relates to a method for producing a microcapsule wherein a core material is a functional organic compound such as a pharmaceutical, an agricultural chemical, a perfume, a heat storage material, or the like, and a shell material is a polymer of a vinyl monomer, and a microcapsule obtained by this method.

In particular, the present invention relates to a method for producing a microcapsule that can arbitrarily control chemical characteristics, physical characteristics, and shaping characteristics (particle diameter distribution, etc.) of a polymer as a shell material in order to enhance effects of function retention (leakage prevention, etc.) and function expression (permeation control, etc.) of a functional organic compound as a core material, and a microcapsule obtained by this method.

Background Art

In recent years, an application field of a microcapsule continuously extends. For this reason, the chemical structure, mechanical strength, shape, particle diameter distribution, and the like of a shell attract attention for elemental technologies of determining the function of the microcapsule, and a proposal for improvement is made. From the viewpoints of each of the elemental technologies, various microcapsules represented by a heat storage material microcapsule and methods for producing the same have been proposed (Patent Literatures 1 to 6).

Patent Literature 1 discloses the use, as a latent heat storage material, of a microcapsule including a lipophilic substance (for example, branched or linear $C_{10}$ to $C_{40}$-hydrocarbon, and cyclic hydrocarbon) having a solid/liquid phase transition within a specific temperature range as a core material, and as a shell material, a polymer obtained by dissolving an initiator in a monomer mixture containing an alkyl ester (monomer I) having a specific number of carbon atoms such as acrylic acid; a bifunctional or polyfunctional monomer (monomer II, polyvinyl monomer such as DVB, EGDMA, and TMPT); and another monomer (monomer III, for example, styrene), followed by radical polymerization, and a method for producing the same. Patent Literature 1 describes that the particle diameter of the obtained microcapsule is 1 to 30 $\mu$m, but does not describe the particle diameter distribution. In addition, assuming an emulsification method using a homogenizer stirrer, a microcapsule having narrow particle diameter distribution would not be obtained.

Patent Literature 2 discloses a microcapsule that is used as a heat storage material and has excellent heat storage performance, in which a core substance (for example, wax such as aliphatic hydrocarbon) that is a phase-changing material that stores or radiates latent heat with phase change is coated with a capsule wall of a thermoplastic resin obtained by polymerization of a polymerizable monomer (for example, MMA) using trimethylolpropane trimethacrylate (TMPT) as a crosslinking agent. Patent Literature 2 discloses that the microcapsule is a single-hole microcapsule in which the core substance is put in the capsule wall comprising a continuous coating. However, a high-speed stirring with a homogenizer is used as a method of dispersing an oil phase, and the microcapsule has a particle diameter as large as 20 to 30 $\mu$m. Therefore, although the particle diameter distribution is not disclosed, the particle diameter distribution is assumed to be large from the viewpoints of the dispersion method.

Patent Literature 3 discloses a heat storage microcapsule obtained by stirring, dispersing, and mixing a polymerization monomer solution containing a radically polymerizable monomer (for example, MMA) as the same component as in Patent Literature 2, an aliphatic hydrocarbon, a polymerization initiator, and a bifunctional crosslinkable vinyl monomer and an aqueous dispersion medium containing a dispersion stabilizer at a high speed with a homogenizer, and polymerizing the resultant suspended dispersion at 80°C for a predetermined time. Patent Literature 3 discloses that since a capsule wall as a shell material is hardly ruptured and a core substance hardly leaks out, a microcapsule having high heat storage performance can be obtained. The microcapsule has a particle diameter as large as 10 to 60 $\mu$m and the homogenizer is used in dispersion. Therefore, the particle diameter distribution is assumed to be large from the viewpoints of a method for producing the microcapsule.

Patent Literature 4 discloses a heat storage capsule that is as tough as it is hardly ruptured even during using it as a heat transport medium, and a method for producing the same. In the disclosed heat storage capsule, a heat storage material is placed in a hollow part of a hollow capsule including a shell and the hollow part, and the shell includes a layer composed of a polymer or a copolymer of a crosslinkable monomer, or a copolymer of a crosslinkable monomer and a monofunctional monomer. However, Patent Literature 4 discloses that as a method of dispersing an aqueous solution of a dispersion stabilizer, the heat storage material, and a monomer mixture, a known method including a dispersion method using mechanical shearing force such as a homogenizer and membrane emulsification can be adopted. Therefore, the particle diameter distribution of a microcapsule to be obtained is assumed to be large.

Patent Literature 5 is a patent application of a former company which is succeeded by the present applicant. Patent Literature 5 discloses an emulsification device in which the particle diameter and the particle diameter distribution can be easily controlled, maintenance is simple, and a sufficient production amount suitable for industrial production can be secured in an emulsification apparatus. Patent Literature 5 discloses an emulsification method in which a plurality types of liquids substantially immiscible with each other are caused to successively and continuously pass through a plurality of net bodies that are disposed at certain intervals in the presence of an emulsifier, the net bodies are provided in a cylindrical flow path, and a predetermined number of wire meshes are disposed at certain intervals in the cylindrical flow path. Also disclosed is an emulsification device for the method. Patent Literature 5 further discloses a microcapsule produced using an emulsion obtained by the emulsification device. However, Patent Literature 5 does not specifically disclose a microcapsule having a core-shell structure in which a core material is an organic compound having no vinyl group and a shell material is a polymer of a vinyl monomer, like the present application.

Patent Literature 6 discloses microcapsule particles for a heat storage material in which the heat storage material hardly leaks even after exposure in high-temperature environment for extended periods of time and the heat resistance is excellent. The disclosed microcapsule particles for a heat storage material have a capsule wall of a crosslinkable resin and a heat storage material encased in the wall. In the microcapsule particles, the crosslinkable resin includes a polymerizable monomer containing a polyfunctional polymerizable monomer, the heat storage material is a polyfunctional fatty acid ester having a number average molecular weight (Mn) of 1, 300 to 4, 000, and the content of the heat storage material is 30 to 100 parts by weight relative to 100 parts by weight of the resin. Patent Literature 6 discloses that the particles have a volume average particle diameter (Dv) of 3 to 50 $\mu$m and the particle diameter distribution that is a ratio of Dv to the number average particle diameter (Dn) is 1 to 1.8. Patent Literature 6 discloses that in a dispersion treatment for formation of droplets, a device capable of strong stirring such as an in-line emulsification dispersion device and a high-speed emulsification dispersion device (T. K. homomixer) is used, but does not disclose that microcapsule particles having narrow particle diameter distribution of which the CV value is 30% or less.

However, these known arts only propose each elemental technology separately, as described above, and do not propose a comprehensive solution of all the elemental technologies.

Prior Art Literatures

Patent Literature

Patent Literature 1: Japanese Translation of PCT Patent Application Publication No. 2002-516913
Patent Literature 2: Japanese Patent Application Laid-Open No. 2004-203978
Patent Literature 3: Japanese Patent Application Laid-Open No. 2004-277646
Patent Literature 4: Japanese Patent Application Laid-Open No. 2006-257415
Patent Literature 5: Japanese Patent Application Laid-Open No. 2009-090191
Patent Literature 6: Japanese Patent Application Laid-Open No. 2010-150329

Summary of Invention

Technical Problem

In order to comprehensively solve the problems in association with the elemental technologies, the present inventors have intensively studied. As a result, the inventors have succeeded in achieving shaping uniformity by a particular emulsification treatment of an O/W dispersion containing an organic compound as a core material and a vinyl monomer compound constituting a shell so that functions of a microcapsule are equally expressed while the heat resistance and mechanical strength of the microcapsule and permeation and leakage of the core material are controlled by using a proper vinyl monomer species constituting the shell and designing a crosslinking structure as appropriate. Thus, the present invention has been completed. By formation of a microcapsule according to the present invention, a possibility of preventing leakage of the core material and controlling permeability of a shell material is predicted. For this reason, results of future confirmation test are expected.

Solution to Problem

A first aspect of the present invention relates to a method for producing a microcapsule that is obtained by a polymerization reaction of at least one species of vinyl monomer using an O/W dispersion containing an organic compound having no vinyl group and the vinyl monomer as a raw material, and has a core-shell structure in which a core is the organic compound having no vinyl group and a shell is a polymer of the vinyl monomer. The method includes the step of emulsifying the O/W dispersion by continuously and successively passing the O/W dispersion through a plurality of net bodies that are provided along a flow path and disposed at certain intervals before the polymerization reaction.

A second aspect of the present invention relates to the method for producing a microcapsule according to the first aspect of the present invention, wherein the vinyl monomer contains at least one species of vinyl monomer having an electron withdrawing group and at least one species of vinyl monomer having an electron donating group.

A third aspect of the present invention relates to the method for producing a microcapsule according to the first or second aspect of the present invention, wherein the O/W dispersion comprises a crosslinking agent having two or more vinyl groups.

A fourth aspect of the present invention relates to the method for producing a microcapsule according to the third aspect of the present invention, wherein the crosslinking agent having two or more vinyl groups has an electron withdrawing group.

A fifth aspect of the present invention relates to the method for producing a microcapsule according to any one of the first to fourth aspects of the present invention, wherein the vinyl monomer in the O/W dispersion contains acrylonitrile or methacrylonitrile as the vinyl monomer having an electron withdrawing group and styrene as the vinyl monomer having an electron donating group.

A sixth aspect of the present invention relates to the method for producing a microcapsule according to any one of the first to fifth aspects of the present invention, wherein the microcapsule has a CV value defined by the following equation (1) of 30 or less:

$$\text{CV value} = (\text{standard deviation of droplet diameter distribution}$$

$$/ \text{ volume average particle diameter}) \times 100 \quad \text{Equation (1)}.$$

A seventh aspect of the present invention relates to a microcapsule that has a core-shell structure in which a core is an organic compound having no vinyl group and a shell is a polymer of a vinyl monomer, and is obtained by the method for producing a microcapsule according to any one of the first to sixth aspects of the present invention, wherein the shell is a copolymer of at least two components containing at least one species of vinyl monomer having an electron withdrawing substituent and at least one species of vinyl monomer having an electron donating group as constituent units and the CV value is 30 or less.

An eighth aspect of the present invention relates to the microcapsule according to the seventh aspect of the present invention, wherein the shell is cross-linked by a crosslinking agent containing two or more vinyl groups having an electron withdrawing group.

A ninth aspect of the present invention relates to the microcapsule according to the seventh or eighth aspect of the present invention, wherein the shell contains acrylonitrile or methacrylonitrile as a vinyl monomer having an electron withdrawing group and styrene as a vinyl monomer having an electron donating group.

Advantageous Effects of Invention

According to the present invention, the chemical characteristics and mechanical characteristics of a shell material can be controlled and the shaping characteristics and particle diameter distribution of a microcapsule can be controlled so that the function of a functional organic compound as a core material is retained and expressed, and a microcapsule produced can be used for an insecticide, a fragrance, a heat storage material, and the like, due to the function of the core material.

Brief Description of Drawings

FIG. 1 is an exploded perspective view showing an emulsification device used in a production method of the present invention.

FIG. 2 is a perspective view of a spacer that keeps a net body of the device and determines an interval.

FIG. 3 is a cross-sectional view of the emulsification device used in the production method of the present invention.

Reference Signs List

a    casing
b    wire mesh (net body)

c    spacer

2a    fixing tool

Description of Embodiments

Since an organic compound having no vinyl group according to the present invention is a compound constituting a core material of a microcapsule and has no polymerizable vinyl group, the organic compound is not substantially incorporated into a shell by a reaction with a shell material during a polymerization reaction process of forming the shell material. The organic compound is not particularly limited, and examples thereof may include a perfume (natural perfume, synthesis perfume, and plant essential oil), an agricultural chemical, a physiologically active substance, a repellant, a deodorant, a colorant, a heat storage material, or the like. The organic compounds are preferably hydrophobic, and may be a solid without limitation to a liquid. These core substance or core materials that are dissolved in a non-volatile oil or a solvent having high boiling point can also be used as a core material. Normal paraffin having $C_8$ to $C_{40}$ is used for a heat storage material.

A vinyl monomer in an O/W dispersion to be subjected to a polymerization reaction according to the present invention is not particularly limited. An alkyl ester of acrylic acid or methacrylic acid (wherein the alkyl group usually has 1 to 32 carbon atoms) is preferred. Specific examples thereof may include methyl acrylate, ethyl acrylate, n-propyl acrylate, isopropyl acrylate, n-butyl acrylate, isobutyl acrylate, tert-butyl acrylate, corresponding methacrylic acid esters, acrylonitrile or methacrylonitrile, acrylic acid, methacrylic acid, itaconic acid, maleic acid, maleic anhydride, N-vinylpyrrolidone, 2-hydroxyethyl acrylate and 2-hydroxyethyl methacrylate, acrylamide and methacrylamide, N-methylol acrylamide and N-methylol methacrylamide, styrene, $\alpha$-methylstyrene, butadiene, isoprene, vinyl acetate, vinyl propionate, and 4-vinyl pyridine. Among these, methyl methacrylate, acrylonitrile/methacrylonitrile, and styrene are more preferable.

The vinyl monomer in the O/W dispersion to be subjected to a polymerization reaction according to the present invention preferably contains at least one vinyl monomer having an electron withdrawing group and at least one vinyl monomer having an electron donating group.

The vinyl monomer having an electron withdrawing group has a positive e value that represents the electron density of double bond involved in a polymerization reaction in a vinyl compound (this value is described in Takayuki Otsu, "Kobunshigosei no kagaku" (Kagaku monograph 15), 1968, published by Kagaku-Dojin Publishing Co., Inc.), and usually has a non-polar (hydrophobic) substituent. The vinyl monomer having an electron donating group has a negative e value, and usually has a polar (hydrophilic) substituent.

The vinyl monomer compounds are combined to allow the electron withdrawing group and the electron donating group to attract each other, forming a charge transfer complex, and alternating copolymerization may be caused. Therefore, in a polymer constituting a shell according to the present invention, a probability of localizing a non-polar group and a polar group is small. Accordingly, the hydrophobicity and the hydrophilicity of chemical structure of the shell are homogenized, a microcapsule may have a spherical, pseudospherical, or flat shape, and local permeation or leakage of the core material may be prevented.

The vinyl monomers are added at an equal ratio by mole to achieve intermediate properties of polymers of the vinyl monomers. When the permeation of the core material outside the microcapsule is preferentially accelerated, a vinyl monomer having higher affinity to the core material among the vinyl monomers is relatively increased. When the leakage is preferentially prevented, the vinyl monomer having higher affinity to the core material is relatively decreased. The ratio by mole is usually adjusted within a range of 20:80 to 80:20. When the ratio does not fall within this range, an effect due to the presence of both the non-polar group and the polar group may not be achieved.

Examples of combinations of the vinyl monomers are shown below. These combinations of the vinyl monomers are known to produce an alternating copolymer, and have a difference ($\Delta$e) of e values of 1.0 or more, preferably 1.30 or more, and more preferably 1.50 or more. Specifically, the vinyl monomer having an electron withdrawing group is selected from vinyl chloride (e value = 0. 16), methyl methacrylate (e value = 0.40), methyl acrylate (e value = 0.60), methyl vinyl ketone (e value = 0.68), acrylonitrile (e value = 1.20), methacrylonitrile (e value = 1.00), acrylamide (e value = 1.30), maleic anhydride (e value = 2.25), and vinylidene cyanide (e value = 2.58). The vinyl monomer having an electron donating substituent is selected from $\alpha$-methylstyrene (e value = -1.27), styrene (e value = -0.80), isoprene (e value = -0.55), vinyl acetate (e value = -0.88), and isobutylene (e value = -1.20) (including estimates based on sources: Takayuki Otsu, "Kobunshigosei no kagaku," and "Kisokobunshikagaku" edited by The Society of Polymer Science, Japan, and references thereof).

Among these combinations, a combination of acrylonitrile or methacrylonitrile and styrene is particularly preferred in consideration of reactivity of the vinyl monomers and alternating copolymerization reactivity in addition to the difference between the e values.

In the present invention, an O/W emulsion (or dispersion) containing the organic compound having no vinyl group and the vinyl monomer is used as a raw material to cause a polymerization reaction. The O/W emulsion is an emulsion having an oil phase (the organic compound having no vinyl group and the vinyl monomer) as a dispersed phase and an aqueous phase containing a dispersant as a continuous phase. In the present invention, this O/W emulsion is used as a raw material to cause a polymerization reaction. An initiator necessary for the polymerization reaction, or the like, may coexist during formation of the O/W emulsion, or be added before initiation of the polymerization reaction after the formation of the O/W emulsion.

In the present invention, in order to impart the mechanical strength and the heat resistance to the microcapsule and prevent the leakage of the core material, a compound having two or more vinyl groups (crosslinking agent containing a plurality of vinyl groups) is added and then the polymerization reaction is performed. The compound having two or more vinyl groups is not limited, and for example, a compound known as an organic peroxide crosslinking agent in a rubber processing field can be used.

As the compound having two or more vinyl groups in the present invention, a compound having two or more vinyl groups having an electron withdrawing group is preferably used. This reason is not clear, but the inventors consider that this reason is that the e value of a double bond involved in a crosslinking reaction in the compound is usually negative similar to the vinyl monomer having an electron withdrawing group that constitutes the shell, and the compound is homogeneously disposed in the vinyl monomer having an electron donating group that constitutes the shell. Specific examples of the compound may include divinylbenzene (DVB), ethylene glycol dimethacrylate (EGDMA), and trimethylol propane trimethacrylate (TMPT).

A polymerization initiator to be subjected to the polymerization reaction according to the present invention is not particularly limited. As radical polymerization initiator to radically promote polymerization, a typical peroxy compound and azo compound can be used.

Preferred examples of the radical polymerization initiator may include tert-butyl peroxyneodecanoate, tert-amyl peroxypivalate, dilauroyl peroxide, tert-amyl peroxy-2-ethylhexanoate, 2,2'-azobis(2,4-dimethylvaleronitrile), 2,2'-azobis(2-methylbutyronitrile), dibenzoyl peroxide, tert-butyl-per-2-ethylhexanoate, di-tert-butyl peroxide, tert-butyl hydroperoxide, 2,5-dimethyl-2,5-di(tert-butyl peroxy)hexane, and cumene hydroperoxide.

More preferred examples of the radical polymerization initiator may include di-(3,5,5-trimethylhexanoyl) peroxide, 4,4'-azobisisobutylonitrile, tert-butyl peroxypivalate, dimethyl-2,2-azobisisobutyrate, and 1,1,3,3,-tetramethyl butyl peroxy-2-ethylhexanoate. These initiators have a half-life of 10 hours within a temperature range of 30 to 100°C.

A chain transfer agent to be subjected to the polymerization reaction according to the present invention is not particularly limited. Preferred examples thereof may include (A) mercaptans including a mercaptan (for example, octylmercaptan, n- or tert-dodecylmercaptan), thiosalicylic acid, mercaptoacetic acid, and mercaptoethanol, (B) halogenated compounds, and (C) α-methylstyrene dimer. In particular, mercaptans are further preferred.

A dispersion stabilizer in the O/W dispersion to be subjected to the polymerization reaction according to the present invention is not particularly limited. Preferred examples thereof may include partially saponified polyvinyl acetate, cellulose derivatives, and polyvinylpyrrolidone. In particular, partially saponified polyvinyl acetate is more preferable.

In the present invention, the O/W dispersion is treated by a step of continuously and successively passing the O/W dispersion through a plurality of net bodies that are provided along a flow path and disposed at certain intervals before the start of polymerization reaction.

The O/W dispersion having a predetermined composition is passed in the flow path at a linear speed of 0.1 to 50 cm/sec. The net bodies are disposed at a plurality of positions in the flow path at certain intervals. A supplied emulsification raw material is successively passed through the net bodies. At this time, miniaturization of the dispersed phase in the O/W dispersion proceeds, and is stabilized and homogenized, and the CV value of droplets of the dispersed phase becomes 50% or less. A value approximate to this value is retained as a CV value of a microcapsule after the polymerization reaction. The inventors consider that a CV value of 30% or less may be regarded as a measure of uniformity in an expression of function of the microcapsule. However, it is difficult to obtain this value by general batch emulsification.

The mechanism of emulsification by this method, the functional effect of the net bodies, and the like, are not clear, but are considered as follows. Once a fluid reaches the net body, the fluid is divided by many meshes of the net body into droplets, the produced droplets are stabilized before they reach the next net body, and as a result, the particle diameter of droplets of the dispersed phase is made uniform. The droplets of the dispersed phase become a core-shell structure, in which the organic compound having no vinyl group and the vinyl monomer are disposed in a core and a shell, respectively.

Through these processes, micelle in which hydrophilic groups are on the surface of a sphere may be formed and arranged, and as a result, the vinyl monomer may act as a surfactant-like function. In particular, the combination of the vinyl monomers according to the present invention (combination of hydrophobicity and hydrophilicity) may contribute to the expression of this function.

The distance between the net bodies depends on the fluid flow speed in the flow path, the fluid viscosity, or the like, and specifically, the distance is usually 5 mm to 200 mm, and more preferably 10 mm to 100 mm. Herein, when the flow speed is higher, it is preferable that a longer distance may be adopted. When the fluid viscosity is higher, it is preferable that a shorter distance may be adopted. Further, it is important that the net bodies are disposed at a plurality of positions along the flow path. It is preferable that the number of positions may be 30 to 200. The aperture of the net bodies is the number of mesh in accordance with ASTM Standard, and is preferably 35 to 4,000, and more preferably 150 meshes to 3,000 meshes.

Examples

Hereinafter, the present invention will be described further specifically with reference to Examples and Comparative Examples. The present invention is not limited to the following Examples.

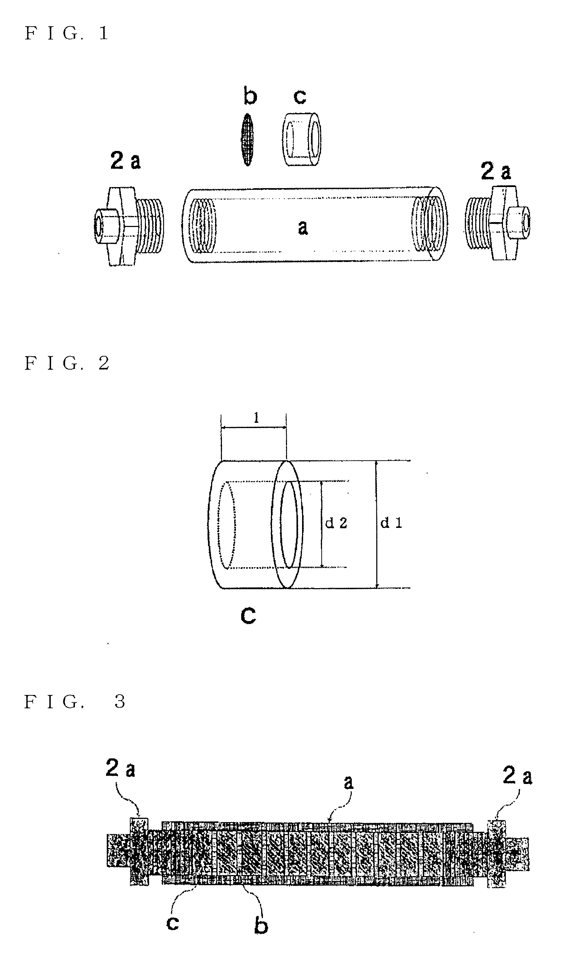

FIGs. 1 to 3 show one example of an emulsification device used in the production method of the present invention.

[Example 1]

<Preparation and treatment of O/W emulsion before polymerization reaction>

30 units including wire mesh b made of 1, 400 main meshes and a spacer c with a length (1) of 10 mm and an internal diameter ($d_2$) of 15 mm were inserted into a cylindrical casing a with an internal diameter of 20 mm and a length of about 500 mm to construct an emulsification device. In FIG. 3, the number of net bodies is set to 10 for ease of understanding.

A dispersion in which an aqueous solution of dispersant (PVA217EE available from KURARAY CO. , LTD., 0.5 parts by weight) was added to an oil phase mixture of TS-8 (chemical name: n-octadecane, function: heat storage) available from JX Nippon Oil & Energy Corporation as an organic compound having no vinyl group, styrene as a vinyl monomer, EGDMA (composition is shown in Table 1) as a crosslinking agent, 1.4 parts by weight of PEROCTA O (POO) (chemical name: 1,1,3,3,-tetramethylbutyl peroxy-2-ethylhexanoate) available from NOF Corporation as an initiator, and 3.0 parts by weight of THIOKALCOL 20 (chemical name: n-dodecyl mercaptan) available from Kao Corporation as a chain-transfer agent was used as an O/W dispersion. The oil phase mixture and the aqueous solution of dispersant were introduced into the emulsification device at flow speeds of 15 g/min and 30 g/min, respectively, with respective separate plunger pumps, to carry out emulsification. As a result, an O/W emulsion was obtained, and used as a raw material for polymerization.

<Polymerization reaction>

60 g of the O/W emulsion obtained by the above operation and 40 g of an aqueous solution of dispersant (PVA217EE available from KURARAY CO., LTD., 1.5 parts by weight) were placed in a container (polymerization tank) equipped with a stirrer, a pressure gauge, and a thermometer. The pressure of a polymerization container was decreased to remove oxygen in the container, returned to normal pressure using nitrogen, and increased to 0.3 MPa using nitrogen. The temperature in the polymerization tank was increased to 110°C with the stirrer rotating, to initiate polymerization. The polymerization was terminated for 2 hours, and the temperature in the polymerization tank was cooled down to room temperature. A polymerization emulsion was filtered through a filter paper, to isolate a heat storage material microcapsule. The heat storage material microcapsule was dried at 80°C under an atmospheric pressure, to obtain a powder of the heat storage material microcapsule.

<Measurement of characteristics of microcapsule>

(1) The particle diameter and the CV value were measured by the following methods.

The volume average diameter (hereinafter referred to as "volume average particle diameter") of slurry obtained as described above and the droplet diameter distribution were measured by a Coulter counter (Multisizer 4, manufactured by Beckman Coulter, Inc.). Herein, the number of measured particles was 100, 000. As a result, the volume average particle diameter of droplets was 24 $\mu$m, and the CV value was 27%. The CV value used as an indication of droplet diameter distribution was calculated by the following equation (1).

$$\text{CV value} = \text{standard deviation of droplet diameter distribution} / \text{volume average particle diameter} \times 100 \quad \text{Equation (1)}$$

The volume average particle diameter and the CV value were measured by the same methods also in the following Examples and Comparative Examples.

(2) The VOC values were measured by the following method.

0.1 g of sample was weighed in a petri dish, and the dish was placed in a micro chamber. A radiation test was carried out under a condition of standing at 100°C for 2 hours, followed by at 25°C for 22 hours. A generated gas was collected by a Tenax TA tube. The diffused gas collecting tube (Tenax TA tube) and the micro chamber were subjected to solvent extraction with hexane, and the generated gas was determined by a gas chromatograph-mass spectrometer (GC/MS).

The results of measurement of the characteristic values are shown in Table 1.

[Example 2]

<Preparation and treatment of O/W emulsion before polymerization reaction>

30 units including a wire mesh made of 3, 000 main meshes and a spacer with a length of 10 mm and an internal diameter of 15 mm was inserted into a cylindrical casing with an internal diameter of 20 mm and a length of about 500 mm to construct an emulsification device.

A dispersion medium obtained by mixing an aqueous solution of dispersant (PVA217EE available from KURARAY CO., LTD., 2 parts by weight) in an oil phase mixture of paraffin TS-8 (chemical name: n-octadecane, function: heat storage) available from JX Nippon Oil & Energy Corporation as an organic compound having no vinyl group, styrene as a vinyl monomer, EGDMA (composition is shown in Table 1) as a crosslinking agent, 1.4 parts by weight of PEROCTA O (POO) available from NOF Corporation as an initiator, and 3.0 parts by weight of THIOKALCOL 20 (chemical name: n-dodecyl mercaptan, also referred to as "DM") available from Kao Corporation as a chain-transfer agent was used as an O/W dispersion. The oil phase mixture and the aqueous dispersant solution were introduced into the emulsification device at flow speeds of 30 g/min and 60 g/min, respectively, with respective separate plunger pumps, to carry out emulsification. As a result, an O/W emulsion was obtained. The O/W emulsion was diluted with distilled water, and the O/W emulsion having an oil phase concentration of 20% by weight was used as a raw material for polymerization.

<Polymerization reaction>

60 g of the O/W emulsion and 40 g of distilled water were placed in a container (polymerization tank) equipped with a stirrer, a pressure gauge, and a thermometer. The pressure of a polymerization container was decreased to remove oxygen in the container, and the pressure of a polymerization layer was returned to normal pressure using nitrogen, and increased to 0.3 MPa using nitrogen. The temperature in the polymerization tank was increased to 110°C with the stirrer rotating, to initiate polymerization. The polymerization was terminated for 2 hours, and the temperature in the polymerization tank was cooled down to room temperature. A slurry containing a heat storage microcapsule having a microcapsule concentration of about 20% by weight was obtained. A polymerization liquid was filtered through a filter paper, to isolate a heat storage microcapsule. The heat storage microcapsule was dried at 80°C under an atmospheric pressure, to obtain a powder of the microcapsule.

The characteristic values of the obtained microcapsule sample were measured. The results thereof are shown in Table 1.

[Example 3]

<Preparation and treatment of O/W emulsion before polymerization reaction>

An O/W emulsion was prepared by the same operation as in Example 2 except that a wire mesh having 2,400 meshes was used instead of the wire mesh having 3,000 meshes.

<Polymerization reaction>

The O/W emulsion was polymerized in the same manner as in Example 2, to prepare a powder of microcapsule.

The characteristic values of the obtained microcapsule sample were measured. The results thereof are shown in Table 1.

[Comparative Example 1]

<Preparation and treatment of O/W emulsion before polymerization reaction>

160 g of an aqueous solution of dispersant (PVA217EE available from KURARAY CO., LTD., 2 parts by weight) was placed at room temperature, 80 g of oil phase substances (each composition is shown in Table 1) containing styrene as a polymerizable component, EGDMA as a crosslinking agent, and "TS-8" as a non-polymerizable component was mixed, and the mixture was dispersed at 3,000 rpm using a homogenizer for 5 minutes to obtain an O/W emulsion.

<Polymerization reaction>

A powder of heat storage microcapsule was obtained by an operation under the same polymerization condition as in Example 2.
The respective characteristic values of the obtained microcapsule sample were measured. The results thereof are shown in Table 1.

[Table 1]

| | ORGANIC COMPOUND HAVING NO VINYLMONOMER (parts by weight) | VINYL MONOMER COMPOUND (parts by weight) | | CROSSLINKING AGENT (parts by weight) | PARTICLE DIAMETER (μm) | VOC (mg/g) | CV VALUE (%) |
| | | HAVING ELECTRON ATTRACTIVE SUBSTITUENT | HAVING ELECTRON DONATING SUBSTITUENT | | | | |
|---|---|---|---|---|---|---|---|
| EXAMPLE 1 | TS8 (40) | - | STYRENE (40) | EGDMA (20) | 24 | 10.2 | 27 |
| EXAMPLE 2 | TS8 (40) | - | STYRENE (40) | EGDMA (20) | 10 | 6.4 | 26 |
| EXAMPLE 3 | TS8 (40) | - | STYRENE (40) | EGDMA (20) | 12 | 14.4 | 28 |
| COMPARATIVE EXAMPLE 1 | TS8 (40) | - | STYRENE (40) | EGDMA (20) | 24 | 15.1 | 42 |

[Example 4]

An O/W emulsion was obtained by the same operation as in Example 2 except that styrene and MMA were used as vinyl monomers, DVB was used as a crosslinking agent, and a composition of Table 1 was used for addition.

The above O/W emulsion was used as a raw material to cause a polymerization reaction in the same manner as in Example 2. Thus, a powder of microcapsule was obtained.

The VOC and CV values of the obtained microcapsule were measured by the processes described in Example 1. A weight loss by heating measured by the following measurement method is shown in Table 2.

<Measurement of weight loss by heating>

1 to 2 g of dried microcapsule was weighed in an alumina cup, and retained at 80°C under vacuum for 5 hours. The weight loss by heating was measured.

[Example 5]

An O/W emulsion was obtained by the same operation as in Example 2, and polymerized in the same manner as in Example 2, to obtain a powder of microcapsule.

The characteristic values of the obtained microcapsule were measured. The results thereof are shown in Table 2.

[Example 6]

An O/W emulsion was obtained in the same manner as in Example 2 except that TMPT was used as a crosslinking agent, and polymerized in the same manner as in Example 2, to obtain a powder of microcapsule.

The characteristic values of the obtained microcapsule were measured. The results thereof are shown in Table 2.

[Example 7]

An O/W emulsion was prepared by the same operation as in Example 2 except that styrene and acrylonitrile were added as vinyl monomers at a composition in Table 1 and a cross-linking agent was added at a composition (part by weight) in Table 1, and polymerized to obtain a powder of microcapsule.

The characteristic values of the obtained microcapsule were measured. The results thereof are shown in Table 2.

[Example 8]

An O/W emulsion was prepared by the same operation as in Example 2 except that styrene and acrylonitrile were added as vinyl monomers at a composition in Table 1, and EGDMA was added as a crosslinking agent at a composition (part by weight) in Table 1, and polymerized to obtain a powder of microcapsule.

The characteristic values of the obtained microcapsule were measured. The results thereof are shown in Table 2.

[Example 9]

An O/W emulsion was prepared by the same operation as in Example 2 except that styrene and methacrylonitrile were added as vinyl monomers at a composition in Table 1, and EGDMA was added as a crosslinking agent in a composition (part by weight) in Table 1, and polymerized to obtain a powder of microcapsule.

The characteristic values of the obtained microcapsule were measured. The results thereof are shown in Table 2.

[Table 2]

| | ORGANIC COMPOUND HAVING NO VINYL MONOMER (parts by weight) | VINYL MONOMER COMPOUND (parts by weight) | | CROSSLINKING AGENT (parts by weight) | WEIGHT LOSS BY HEATING (%) | VOC (mg/g) | CV VALUE (%) |
| | | HAVING ELECTRON ATTRACTIVE SUBSTITUENT | HAVING ELECTRON DONATING SUBSTITUENT | | | | |
|---|---|---|---|---|---|---|---|
| EXAMPLE 4 | TS8 (40) | MMA (30) | STYRENE (20) | DVB (10) | 7.1 | 5.0 | 25 |
| EXAMPLE 5 | TS8 (40) | - | STYRENE (40) | EGDMA (20) | 6.0 | 6.4 | 26 |
| EXAMPLE 6 | TS8 (40) | - | STYRENE (40) | TMPT (20) | 9.3 | 5.7 | 28 |
| EXAMPLE 7 | TS8 (40) | ACRYLONITRILE (15) | STYRENE (30) | EGDMA (15) | 0.1 | 2.5 | 24 |
| EXAMPLE 8 | TS8 (40) | ACRYLONITRILE (15) | STYRENE (15) | EGDMA (30) | 0.0 | 1.6 | 26 |
| EXAMPLE 9 | TS8 (40) | METHACRYLONITRILE (15) | STYRENE (15) | EGDMA (30) | 2.3 | 5.5 | 25 |

<Consideration>

As shown from the results of Table 1, in microcapsules obtained by polymerization of the O/W emulsion using only styrene as a vinyl monomer for a shell material and n-octadecane as an organic compound for a core material in Examples 1 to 3, all the CV values are as small as less than 30%, and the particle diameter distribution is uniform as compared with Comparative Example 1 using a homogenizer in emulsification.

As estimated from the results of Table 2, in microcapsules obtained by polymerization of the O/W emulsion obtained by the emulsification method according to the present invention in which 15 parts by weight of acrylonitrile or methacrylonitrile and 15 to 30 parts by weight of styrene were used as vinyl monomers for a shell material ($\Delta e$ value is about 2.0), n-octadecane is used for a core material, and a predetermined amount of crosslinking agent is added, in Examples 7 to 9, the weight loss by heating is low, the heat resistance is high, and the processing stability is excellent. In addition, VOC is also low as compared with Comparative Example 1 using homogenizer in dispersion. Accordingly, the microcapsules contribute to prevention of leakage or volatilization of the core material, and therefore contribute to the safety of substances.

Industrial Applicability

Microcapsule particles obtained by the method of the present invention have a functional organic compound as a core material and a cross-linked or non-cross-linked polymer as a shell material, and have particle diameter distribution that is smaller and more uniform than a conventional product. Therefore, the microcapsule particles achieve stabilization and efficiency of expression of function of the core material.

The microcapsule of the present invention can be used for various applications such as a perfume, a pharmaceutical, an agricultural chemical, an insecticide, a physiologically active substance, a repellent, a deodorant, a colorant, a fragrance, and a heat storage material.

**Claims**

1. A method for producing a microcapsule that is obtained by a polymerization reaction of at least one species of vinyl monomer using an O/W dispersion containing an organic compound having no vinyl group and the vinyl monomer as a raw material, and has a core-shell structure in which a core is the organic compound having no vinyl group and a shell is a polymer of the vinyl monomer compound, the method comprising the step of
emulsifying the O/W dispersion by continuously and successively passing the O/W dispersion through a plurality of net bodies that are provided along a flow path and disposed at certain intervals before the polymerization reaction.

2. The method for producing a microcapsule according to claim 1, wherein
the vinyl monomer compound contains at least one species of vinyl monomer having an electron withdrawing group and at least one species of vinyl monomer having an electron donating group.

3. The method for producing a microcapsule according to claim 1 or 2, wherein
the O/W dispersion contains a crosslinking agent having two or more vinyl groups.

4. The method for producing a microcapsule according to claim 3, wherein
the crosslinking agent having two or more vinyl groups has an electron withdrawing group.

5. The method for producing a microcapsule according to any one of claims 1 to 4, wherein
the vinyl monomer in the O/W dispersion contains acrylonitrile and/or methacrylonitrile as the vinyl monomer having an electron withdrawing group and styrene as the vinyl monomer having an electron donating group.

6. The method for producing a microcapsule according to any one of claims 1 to 5, wherein
the microcapsule has a CV value defined by the following equation (1) of 30 or less:

```
    CV value = (standard deviation of droplet diameter distribution / volume average particle diameter) × 100

Equation (1).
```

7.  A microcapsule that has a core-shell structure in which a core is an organic compound having no vinyl group and a shell is a polymer of a vinyl monomer, and is obtained by the method for producing a microcapsule according to any one of claims 1 to 6, wherein
    the shell is a copolymer of at least two components containing at least one species of vinyl monomer having an electron withdrawing substituent and at least one species of vinyl monomer having an electron donating group as constituent units and a CV value thereof is 30 or less.

8.  The microcapsule according to claim 7, wherein
    the shell is cross-linked by a crosslinking agent containing two or more vinyl groups having an electron withdrawing group.

9.  The microcapsule according to claim 7 or 8, wherein
    the shell contains acrylonitrile and/or methacrylonitrile as a vinyl monomer having an electron withdrawing group and styrene as a vinyl monomer having an electron donating group.

FIG. 1

FIG. 2

FIG. 3

## INTERNATIONAL SEARCH REPORT

| | International application No. |
|---|---|
| | PCT/JP2014/050608 |

### A. CLASSIFICATION OF SUBJECT MATTER
*B01J13/14*(2006.01)i, *B01F3/08*(2006.01)i, *C08F2/22*(2006.01)i, *C08F2/44*(2006.01)i, *C08F212/08*(2006.01)i, *C08F220/42*(2006.01)i

According to International Patent Classification (IPC) or to both national classification and IPC

### B. FIELDS SEARCHED

Minimum documentation searched (classification system followed by classification symbols)
B01J13/02-22, B01F3/08, A61K9/50

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2007/117041 A1 (Nippon Oil Corp.), 18 October 2007 (18.10.2007), claims 1, 12; page 17, line 12 to page 18, line 7; example 6 & US 2009/0123755 A1 | 1-9 |
| Y | WO 2004/058910 A1 (Matsumoto Yushi-Seiyaku Co., Ltd.), 15 July 2004 (15.07.2004), claims 1, 2; page 4, 5th line from the bottom to page 6, line 12; example 1 & JP 4542908 B2      & US 2006/0063000 A1 & EP 1577359 A1 | 1-9 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 26 March, 2014 (26.03.14) | 08 April, 2014 (08.04.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/050608

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2-294655 A  (Mita Kogyo Kabushiki Kaisha), 05 December 1990 (05.12.1990), claim 1; examples (Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002516913 W
- JP 2004203978 A
- JP 2004277646 A
- JP 2006257415 A
- JP 2009090191 A
- JP 2010150329 A

### Non-patent literature cited in the description

- Kobunshigosei no kagaku. **TAKAYUKI OTSU.** Kagaku monograph 15. Kagaku-Dojin Publishing Co., Inc, 1968
- **TAKAYUKI OTSU.** Kobunshigosei no kagaku," and "Kisokobunshikagaku